# EUROPÄISCHE PATENTSCHRIFT

(11) **EP 3 586 099 B1**
(45) Veröffentlichungstag und Bekanntmachung des Hinweises auf die Patenterteilung: **14.07.2021**
(21) Anmeldenummer: 18701702.5
(22) Anmeldetag: 19.01.2018
(51) Int. Cl.: G01M 3/28, G01B 5/00

(54) **PRÜFEINRICHTUNG SOWIE MESSVERFAHREN**
TESTBENCH AND MEASURING PROCEDURE
BANC D'ESSAI ET PROCÉDURE DE MESURE

(30) Priorität: 27.02.2017 DE 102017203110
(43) Veröffentlichungstag der Anmeldung: 01.01.2020
(73) Patentinhaber: Bayerische Motoren Werke Aktiengesellschaft, 80809 München (DE)
(72) Erfinder: ROSSBERG, Dirk, 85386 Deutenhausen (DE); WIEDEMANN, Stefan, 80935 München (DE)
(86) Internationale Anmeldenummer: PCT/EP2018/051257
(87) Internationale Veröffentlichungsnummer: WO 2018/153579

(56) Entgegenhaltungen:
- DE-A1- 4 132 433
- DE-A1- 19 931 676

## Beschreibung

Die vorliegende Erfindung betrifft eine Prüfeinrichtung sowie ein Messverfahren, insbesondere für Leitungssysteme für Automotive-Anwendungen.

Derzeit werden im Automobilbau Leitungen, wie beispielsweise Kältemittelleitungen (Kombination aus bearbeiteten und umgeformten Alurohren, teilweise kombiniert mit umgeformten und geformten Gummischläuchen), nach der Fertigung in einer Lehre auf Maßhaltigkeit und anschließend in einer Heliumprüfkammer auf Dichtheit geprüft. Derartige Lehren sind allerdings teuer, insbesondere, als sie immer Bauteil-individuell hergestellt werden müssen. Zudem bedingt dieser Ansatz immer die beiden Schritte der Maßhaltigkeitsmessung und des anschließenden Dichtheitstests, bzw. umgekehrt, und ist damit sehr zeitintensiv.

Die DE 41 32 433 A1 offenbart eine Vorrichtung für die Kontrolle des Abstands der Anschlussverschraubung/Stutzen von Haushalts-Gaszähleranschlussarmaturen.

Die DE 199 31 676 A1 betrifft ein Verfahren und eine Vorrichtung zum Vermessen von Werkstücken, insbesondere Fahrzeugkarosserien und deren Teilen.

Es ist daher eine Aufgabe der vorliegenden Erfindung, eine Prüfeinrichtung sowie ein Messverfahren anzugeben, welche die vorgenannten Nachteile beseitigen und einen zeit- und kostengünstigen Ansatz bereitstellen.

Diese Aufgabe wird durch eine Prüfeinrichtung gemäß Anspruch 1 sowie durch ein Messverfahren gemäß Anspruch 11 gelöst. Weitere Vorteile und Merkmale ergeben sich aus den Unteransprüchen sowie der Beschreibung und den beigefügten Figuren.

Erfindungsgemäß umfasst eine Prüfeinrichtung ein erstes Messsystem, welches zu einer Dichtheitsprüfung eines Prüflings ausgelegt ist, sowie ein zweites Messsystem, welches zu einer Maßüberprüfung des Prüflings ausgelegt ist, wobei das erste Messsystem zumindest einen Anschlussbereich aufweist, über welchen ein Prüfmedium in den Prüfling eingebracht und/oder ausgeleitet werden kann, und wobei der Prüfling über den zumindest einen Anschlussbereich in eine Rotation versetzbar ist, auf welcher die Maßüberprüfung basiert. Gemäß einer bevorzugten Ausführungsform handelt es sich bei dem Prüfling um eine Leitung, insbesondere um eine Kältemittelleitung, in bzw. für Automotive-Anwendungen, bzw. um eine Kombination von Leitungen. Eine derartige Leitung besteht beispielsweise aus einer Kombination aus bearbeiteten und umgeformten Metallrohren, beispielsweise Aluminiumrohren, teilweise kombiniert mit umgeformten und geformten Gummischläuchen. Diese führen z. B. das Kältemittel der Klimaanlage, sodass deren Dichtheit unabdingbar für deren Funktion ist.

Wie eingangs erwähnt, ist es aus dem Stand der Technik bekannt, derartige (Kältemittel-)Leitungen für Automotive-Anwendungen nach deren Fertigung in einer Lehre auf Maßhaltigkeit und anschließend in einer Prüfkammer auf Dichtheit zu prüfen (bzw. umgekehrt), wobei die hierzu benötigten Lehren allerdings sehr kostenintensiv sind. Zudem ist das Verfahren sehr aufwendig, da immer die beiden Schritte "Maßhaltigkeitsmessung" und "Überprüfung der Dichtheit" erfolgen müssen. Erfindungsgemäß ist nun mit Vorteil der zumindest eine Anschlussbereich, über welchen das Prüfmedium in den Prüfling eingebracht (oder wieder entfernt) werden kann, sowohl zur Aufnahme bzw. zum Halten des Prüflings vorgesehen, als auch dazu, diesen zu verlagern, zu drehen bzw. in eine Rotation zu versetzen. Mit Vorteil wird diese Verlagerung bzw. Bewegung des Prüflings zur Maßüberprüfung herangezogen.

Zweckmäßigerweise handelt es sich bei der Maßüberprüfung um eine optische Vermessung, insbesondere um eine dreidimensionale optische Vermessung. Zweckmäßigerweise wird hierzu der Prüfling in eine festgelegte Rotation, insbesondere mit einer konstanten Drehzahl, versetzt. Der daraus resultierende Rotationskörper kann über das erste Messsystem bezüglich hinterlegter Grenzmuster abgefragt werden. Hierzu sind beispielsweise vorab entsprechende Grenzmuster (groß bzw. klein) des jeweiligen Bauteils vermessen worden, um die resultierenden Hüllkurven der Rotationskörper zu hinterlegen. Gegenüber dem Stand der Technik kann somit auf kostenintensive Lehren verzichtet werden. Zudem ist eine deutliche Zeitersparnis möglich, da die Dichtheitsprüfung sowie die Maßüberprüfung, zumindest in weiten Teilen, gleichzeitig durchgeführt werden können. Als besonders vorteilhaft ist zudem zu erwähnen, dass auf einfachste Weise und unmittelbar eine Überprüfung der Formbeständigkeit des Prüflings ermöglicht wird, wenn dieser druckbeaufschlagt wird.

Bevorzugt ist das Prüfmedium ein Prüfgas. Bei einer Dichtheitsprüfung, auch Lecktest genannt, werden Flüssigkeiten oder Gase führende Leitungen, Kanäle, Behälter etc. auf Lecks bzw. Dichtheit geprüft. Ziel der Dichtheitsprüfung ist die frühzeitige Erkennung von Materialfehlern, Rissen etc.

Mögliche Prüfgase sind beispielsweise Luft, Stickstoff, Wasserstoff, Formiergas oder insbesondere Helium. Die Dichtheitsmessung kann beispielsweise auf einer Messung des Absolutdrucks oder auf Basis eines im Prüfling detektierten Druckabfalls erfolgen. Gemäß einer bevorzugten Ausführungsform wird die Dichtheitsprüfung mit dem Prüfgas Helium durchgeführt. Dazu wird in den Prüfling eindringendes oder aus dem Prüfling austretendes Prüfgas mit einem entsprechend angeordneten Massenspektrometer gemessen. Typische Prüfdrücke liegen hierbei in einem Bereich von etwa 60 bar, welche abhängig vom untersuchten Bauteil z. B. auch auf bis zu 250 bar erweitert werden können.

Gemäß einer Ausführungsform wird der Prüfling, insbesondere die Kältemittel-Schlauchleitung eines Klima- bzw. Kältekreislaufs eines Kraftfahrzeugs, evakuiert und mit Kältemittel gefüllt. Mittels Stickstoff, Helium oder Druckluft wir ein Prüfdruck aufgebracht, welcher bei Saugleitungen in einem Bereich von etwa 20 bar und bei Druckleitungen in einem Bereich von etwa 35 bar liegt. Die Prüfzeit beträgt in der Serienfertigung etwa 20 Sekunden. Der gesamte Test erfolgt gemäß bevorzugten Ausführungsformen im Rahmen einer Integral- bzw. Kammerprüfung. Bei der integralen Kammerprüfung wird der Prüfling mit Druck beaufschlagt. Das durch Leckagen austretende Prüfgas wird in einer den Prüfling umgebenden Glocke, beispielsweise über ein Gebläse, homogenisiert. Durch Entnahme einer Gasprobe kann die Gaskonzentration ermittelt werden.

Erfindungsgemäß ist der zumindest eine Anschlussbereich um eine Drehachse drehbar gelagert. Zweckmäßigerweise kann auf diese Weise der mit dem Anschlussbereich verbundene Prüfling um die Drehachse gedreht bzw. rotiert werden. Der Prüfling, mit anderen Worten also das zu prüfende Bauteil, wie z. B. die Kältemittelleitung, weist hierzu entsprechende Anschlüsse (bzw. zumindest einen) auf, wobei es sich dabei bevorzugt bereits um den oder die finalen Anschlüsse handelt, mit welchen das Bauteil schließlich auch im Fahrzeug verbaut wird.

Gemäß einer Ausführungsform ist der zumindest eine Anschlussbereich auf einem Trageelement angeordnet bzw. vorgesehen, welches um eine Rotationsachse drehbar gelagert ist. Der zumindest eine Anschlussbereich und/oder das Tragelement können also drehbar gelagert sein. Bei dem Tragelement handelt es sich gemäß einer Ausführungsform beispielsweise um eine (im Wesentlichen ebene) Platte, welche sich im Wesentlichen quer zur Rotationsachse bzw. zur Drehachse des Anschlussbereichs erstreckt. Zweckmäßigerweise ist auf dem Tragelement der zumindest eine Anschlussbereich angeordnet bzw. positioniert. Gemäß einer Ausführungsform können auch mehrere Anschlussbereiche auf einem Tragelement angeordnet sein, zweckmäßigerweise an unterschiedlichen Positionen. Zweckmäßigerweise sind die Anschlussbereiche auf dem Tragelement auch verlagerbar, insbesondere verfahrbar, wie verschiebbar, beispielsweise von der Mitte des Tragelements an einen Randbereich etc. Hierzu umfasst das Tragelement beispielsweise ein Schienensystem, auf welchem der zumindest eine Anschlussbereich, insbesondere auch stufenlos, verschiebbar angeordnet werden kann, insbesondere in Bezug auf die Rotationsachse des Tragelements z. B. radial verschiebbar.

Gemäß einer bevorzugten Ausführungsform sind gegenüberliegend zwei Tragelemente vorgesehen, wobei bevorzugt auf jedem Tragelement zumindest ein Anschlussbereich vorgesehen ist. Vorteilhafterweise kann bei dieser Anordnung der zu untersuchende Prüfling dazwischen angeordnet bzw. positioniert werden. Zweckmäßigerweise wird der zu untersuchende Prüfling zwischen die beiden Tragelemente an den entsprechenden Anschlussbereichen befestigt. Hierzu werden die vorgenannten Anschlüsse des Prüflings verwendet. Zweckmäßigerweise wird der Prüfling also über die Anschlussbereiche eingespannt bzw. fixiert, wobei über die Anschlussbereiche das Zu- und/oder Abführen des für die Dichtheitsprüfung verwendeten Prüfmediums erfolgen kann.

Eine ggf. außermittige Anordnung der Anschlussbereiche auf dem Tragelement ermöglicht auch die Anordnung von Prüflingen, deren Anschlüsse nicht auf einer Achse liegen. Durch das Vorsehen eines variablen Anschlussbereichs kann die Prüfeinrichtung individuell auf die zu vermessenden Objekte/Prüflinge eingestellt werden. Wie bereits angedeutet, können je Tragelement auch mehrere Anschlussbereiche vorgesehen sein, um diese Flexibilität bereitstellen zu können, beispielsweise einer mittig und einer außermittig, wobei mit "Mitte" "auf der Rotationsachse" gemeint ist.

Die Anschlussbereiche können insbesondere relativ zum jeweiligen Tragelement drehbar gelagert sein oder auch nicht, wodurch die Flexibilität der Prüfeinrichtung noch weiter erhöht werden kann. Insofern kann der Prüfling mittelbar und/oder unmittelbar über den zumindest einen Anschlussbereich in Rotation versetzt werden. Grundsätzlich erfolgen die erwähnten Rotationen der Anschlussbereiche oder der Tragelemente beispielsweise mittels geeignetere elektrischer Antriebe und/oder über hydraulische und/oder pneumatische Systeme.

Zweckmäßigerweise kann der Prüfling auch mehr als ein oder zwei, beispielsweise drei, vier oder mehr Anschlüsse aufweisen, welche dann mit entsprechend positionierten Anschlussbereichen verbunden werden. Das Prüfmedium wird in diesem Fall beispielsweise nur über einen Anschlussbereich zugeführt.

Gemäß einer Ausführungsform ist ein Abstand der Tragelemente entlang der Rotationsachse relativ zueinander veränderbar. Zweckmäßigerweise kann dadurch auf unterschiedlich lange Prüflinge bzw. zu vermessende Objekte reagiert werden.

Gemäß einer Ausführungsform weist der zumindest eine Anschlussbereich einen Verbindungsbereich auf, welcher zur form- und/oder kraftschlüssigen Anordnung des Prüflings ausgelegt ist, und wobei dessen Neigung/Winkel relativ zur Rotations- oder Drehachse veränderbar ist. Insofern ist es nicht nötig, dass der Prüfling bzw. dessen Anschlüsse eine bestimmte Position relativ zum Anschlussbereich bzw. zum Tragelement aufweisen. Zweckmäßigerweise ist der Anschlussbereich bzw. dessen Verbindungsbereich derart flexibel, beispielsweise über eine Scharnierfunktion oder ein Kugelgelenk, ausgebildet, dass eine Anpassung der Prüfeinrichtung an die Geometrie des jeweiligen Prüflings gegeben ist. Im Übrigen können zur Abdichtung des Anschlussbereichs gegenüber dem Tragelement aus dem Stand der Technik bekannte Dichtungen, wie Wellendichtungen (vgl. Kältemittelkompressoren) verwendet werden.

Zweckmäßigerweise ist die Maßüberprüfung bzw. die dreidimensionale optische Vermessung eine optische Rotationsvermessung. Hierzu wird der Prüfling zweckmäßigerweise während der Messung in eine festgelegte Rotation, insbesondere mit einer konstanten Drehzahl, versetzt. Der resultierende Rotationskörper wird über Kameraabfrage bezüglich Grenzmuster abgefragt. Zweckmäßigerweise ist vorab jeweils ein Grenzmuster (groß bzw. klein) vermessen worden, um die resultierenden Hüllkurven der Rotationskörper zu hinterlegen.

Zweckmäßigerweise umfasst das zweite Messsystem ein Bilderfassungssystem, welches zumindest zwei Bilderfassungseinheiten, insbesondere Kameras, umfasst.

Gemäß einer Ausführungsform handelt es sich also nicht um eine detaillierte 3D-Vermessung des Prüflings, sondern um eine Erfassung eines durch die Rotation bzw. Drehbewegung initiierten Rotationskörpers bzw. dessen Hüllkurve(n). Dieser Ansatz erlaubt eine schnelle und effektive Entscheidung hinsichtlich der Qualität des entsprechenden Bauteils.

Alternativ können z. B. auch optische 3D-Messverfahren mit Hilfe der Streifenprojektion verwendet werden. Hierbei wird von einem LED-Projektor aus der Prüfling mit einem Streifenmuster beleuchtet und von drei Kameras mit einem Mehrbild-Aufnahmeverfahren aus unterschiedlichen Blickwinkeln erfasst. Möglich ist auch der Einsatz von Lasertechnik, beispielsweise von Laser-Lichtschnitt-Sensoren, welche in der Lage sind, Oberflächenprofile einzuscannen, wobei die so erfassten Daten mit einer speziellen Software ausgewertet werden können.

Gemäß einer bevorzugten Ausführungsform ist das erste Messsystem als Heliumdichtbank ausgebildet, wobei das zweite Messsystem dahingehend ausgelegt ist, eine optische, insbesondere dreidimensionale, Vermessung, eines Bauteils bzw. Prüflings zu ermöglichen. Bevorzugt ermöglicht das erste Messsystem eine integrale Kammerprüfung, wie bereits beschrieben. Gemäße einer Ausführungsform wird die Dichtheitsprüfung dahingehend ergänzt, dass auch eine ggf. vorhandene Stelle der Leckage erkannt werden kann. Zweckmäßigerweise wird vorliegend also eine Heliumdichtheitsprüfung mit einer optischen Vermessung kombiniert, insbesondere mit einer optischen Rotationsvermessung. Mit Vorteil kann so eine Heliumdichtheitsprüfung gleichzeitig mit einer Maßhaltigkeitsmessung durchgeführt werden. Teure und aufwendige Lehren bzw. Halterungen für die Prüflinge, insbesondere für die Leitungen, können entfallen. Durch die variable Ausgestaltung der Prüfeinrichtung mit dem rotationsfähigen Prüfling, kombiniert mit der Kameraabfrage des resultierenden Rotationskörpers, kann eine große Anzahl unterschiedlicher Prüflinge auf einer Anlage mit kurzen Rüstzeiten getestet und auf Maßhaltigkeit überprüft werden. Durch die variabel einstellbaren Anschlussbereiche der Prüfeinrichtung, beispielsweise auf dem oder den Tragelementen, können Bauteile bzw. Leitungen unterschiedlichster Geometrien und Abmessungen, insbesondere auch hinsichtlich der Lage etwaiger Anschlüsse, vermessen und geprüft werden.

Auf eine detailliertere Beschreibung des ersten und des zweiten Messsystems wird vorliegend verzichtet, da die zugrundeliegenden Messverfahren aufgabenbezogen gewählt werden können und nicht auf einen speziellen Typ beschränkt sind. Entscheidend ist die Kombination der beiden Messsysteme in der vorbeschriebenen Art.

Die Erfindung richtet sich auch auf ein Messverfahren, insbesondere für Leitungssysteme von Automotive-Anwendungen, umfassend die Schritte:
- Bereitstellen eines ersten Messsystems zu einer Dichtheitsprüfung eines Prüflings;
- Bereitstellen eines zweiten Messsystems zu einer, insbesondere optischen, Maßüberprüfung des Prüflings;
- Durchführen der Maßüberprüfung während der Dichtheitsprüfung.

Erfindungsgemäß, wie in Anspruch 11 definiert, umfasst das Verfahren weiter die Schritte
- Bereitstellen zumindest eines um eine Drehachse drehbar gelagerten Anschlussbereichs und Anschließen bzw. Verbinden mit dem Prüfling, zum Einleiten eines Prüfmediums in den Prüfling;
- Drehen oder Rotieren des angeschlossenen bzw. verbundenen Prüflings zur Maßüberprüfung mittelbar oder unmittelbar, über den zumindest einen Anschlussbereich.

Zweckmäßigerweise ist das Verlagern eine Rotation, welche mit einer vorgegebenen und insbesondere konstanten Drehzahl erfolgt, und wobei die Maßüberprüfung auf der Vermessung von Hüllkurven basiert.

Zweckmäßigerweise umfasst das Verfahren weiter den Schritt:
- Vermessen zumindest eines Grenzmusters zum Bewerten einer maßlichen Abweichung des Prüflings.

Für das erfindungsgemäße Messverfahren gelten die im Zusammenhang mit der Prüfeinrichtung erwähnten Vorteile und Merkmale analog und entsprechend sowie umgekehrt.

Weitere Vorteile und Merkmale ergeben sich aus der nachfolgenden Beschreibung zweier Ausführungsformen von Prüfeinrichtungen mit Bezug auf die beigefügten Figuren.

Es zeigen:
- Fig. 1:: eine skizzenhafte Darstellung einer Ausführungsform einer Prüfeinrichtung;
- Fig. 2:: eine weitere skizzenhafte Darstellung einer Ausführungsform einer Prüfeinrichtung.

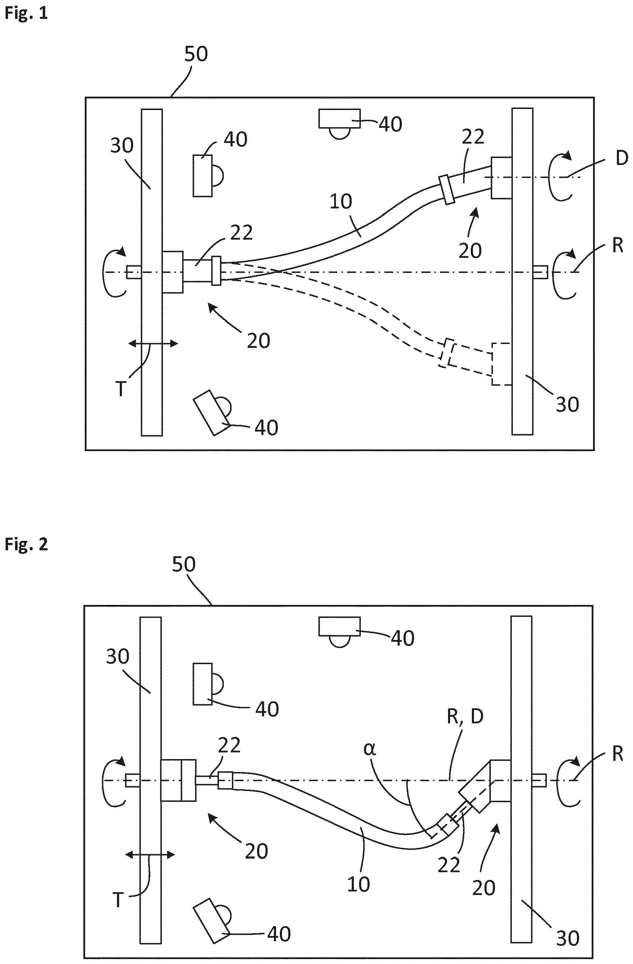

**Fig. 1** zeigt eine Prüfeinrichtung, umfassend ein erstes und ein zweites Messsystem, wobei nur einzelne Teile dieser Messsysteme skizzenhaft dargestellt sind. So ist grundsätzlich ein Prüfling 10, beispielsweise eine (Kältemittel-)Leitung für Automotive-Anwendungen, gezeigt, welcher zwischen zwei Anschlussbereichen 20 eines ersten Messsystems angeordnet bzw. eingespannt/befestigt ist. Über die Anschlussbereiche 20 erfolgt neben der Einspannung bzw. Fixierung gleichzeitig das Zuführen bzw. Ableiten eines Prüfmediums, beispielsweise eines Prüfgases, wie Helium. Die Anschlussbereiche 20 sind jeweils auf einem Tragelement 30 angeordnet, welches sich im Wesentlichen senkrecht zu einer Rotationsachse R erstreckt. Die Tragelemente 30 können um die Rotationsachse R, wie es mit den Pfeilen dargestellt ist, rotieren. Der mit dem Bezugszeichen T bezeichnete Doppelpfeil verdeutlicht, dass das Tragelement 30 (ggf. auch beide) entlang der Rotationsachse R verschoben werden kann, um eine Anpassung an verschiedene Längen des Prüflings 10 zu ermöglichen. Ein dadurch entstehender Rotationskörper, welcher sich durch den rotierenden Prüfling 10 ergibt (vgl. auch die gestrichelte Darstellung) kann über das zweite Messsystem, umfassend ein Bilderfassungssystem, welches in der hier gezeigten Ausführungsform drei Bilderfassungseinheiten 40 in Form von Kameras aufweist, aufgenommen und verarbeitet werden. Zu erkennen ist noch, dass die Anschlussbereiche 20 Verbindungsbereiche 22 umfassen, welche an eine Geometrie bzw. Position, Lage oder Ausrichtung des Prüflings 10 angepasst werden können, insbesondere an eine Lage bzw. Position deren Anschlüsse. Mit dem Bezugszeichen D ist weiter eine Drehachse skizziert, um welche der Anschlussbereich 20 ggf. relativ zum Tragelement 30 gedreht werden kann. Deren Funktionalität wird genutzt, wenn die entsprechenden Anschlussbereiche 20 auf einer gemeinsamen Achse, wie beispielsweise der Rotationsachse R, liegen, wie es beispielsweise in der Fig. 2 der Fall ist. Mit dem Bezugszeichen 50 ist abschließend noch eine Einhausung 50 skizziert. Im Übrigen sind die weiteren Teile bzw. Komponenten der Messsysteme bzw. auch die benötigte Software und Hardware nicht dargestellt.

**Fig. 2** zeigt im Wesentlichen eine Prüfeinrichtung, wie sie bereits aus der Fig. 1 bekannt ist. Skizziert ist hier allerdings mit dem Bezugszeichen α ein Winkel, welcher eine Neigung eines Verbindungsbereichs 22 eines Anschlussbereichs 20 gegenüber einer Rotationsachse R bzw. einer Drehachse D skizziert. Dieser ermöglicht eine Anpassung bzw. Adaption der Prüfeinrichtung an eine Geometrie bzw. Ausrichtung eines Prüflings 10. Im Übrigen sind die Merkmale aus der Fig. 1 bekannt, sodass an dieser Stelle auf diese verwiesen wird.

### Bezugszeichenliste

- 10: Prüfling, Leitung
- 20: Anschlussbereich
- 22: Verbindungsbereich
- 30: Tragelement
- 40: Bilderfassungseinheit, Kamera
- 50: Einhausung
- α: Neigungswinkel
- R: Rotationsachse
- D: Drehachse
- T: Längenanpassung

## Patentansprüche

1. Prüfeinrichtung,
umfassend ein erstes Messsystem, welches zu einer Dichtheitsprüfung eines Prüflings (10) ausgelegt ist, sowie
umfassend ein zweites Messsystem, welches zu einer Maßüberprüfung des Prüflings (10) ausgelegt ist,
wobei das erste Messsystem zumindest einen Anschlussbereich (20) aufweist, über welchen ein Prüfmedium in den Prüfling (10) eingebracht werden kann und welcher zur Aufnahme bzw. zum Halten des Prüflings (10) vorgesehen ist, und
wobei der Prüfling (10) über den zumindest einen Anschlussbereich (20) in eine Rotation versetzbar ist, auf welcher die Maßüberprüfung basiert,
wobei der zumindest eine Anschlussbereich (20) um eine Drehachse (D) drehbar gelagert ist.

2. Prüfeinrichtung nach Anspruch 1,
wobei die Maßüberprüfung eine dreidimensionale optische Vermessung ist.

3. Prüfeinrichtung nach Anspruch 1 oder 2,
wobei der zumindest eine Anschlussbereich (20) auf einem Tragelement (30) angeordnet ist, welches um eine Rotationsachse (R) drehbar gelagert ist.

4. Prüfeinrichtung nach Anspruch 3,
wobei eine Position des zumindest einen Anschlussbereichs (20) auf dem Tragelement (30) veränderbar ist.

5. Prüfeinrichtung nach einem der Ansprüche 3-4,
wobei gegenüberliegend zwei Tragelemente (30) vorgesehen sind, und wobei bevorzugt auf jedem Tragelement (30) zumindest ein Anschlussbereich (20) vorgesehen ist.

6. Prüfeinrichtung nach einem der Ansprüche 3-5,
wobei ein Abstand der Tragelemente (30) relativ zueinander veränderbar ist.

7. Prüfeinrichtung nach einem der Ansprüche 3-6,
wobei der zumindest eine Anschlussbereich (20) einen Verbindungsbereich (22) aufweist, welcher zur form- und/oder kraftschlüssigen Anordnung des Prüflings (10) ausgelegt ist, und
wobei dessen Neigung relativ zur Rotations (R)- oder Drehachse (D) veränderbar ist.

8. Prüfeinrichtung nach einem der vorhergehenden Ansprüche,
wobei die Maßüberprüfung eine optische Rotationsvermessung ist.

9. Prüfeinrichtung nach einem der vorhergehenden Ansprüche,
wobei das zweite Messsystem ein Bilderfassungssystem umfasst, welches zumindest zwei Kameras (40) umfasst.

10. Prüfeinrichtung nach einem der vorhergehenden Ansprüche,
wobei die Prüfeinrichtung eine Einhausung (50) umfasst.

11. Messverfahren, insbesondere für Leitungssysteme von Automotivanwendungen,
umfassend die Schritte:
- Bereitstellen eines ersten Messsystems, welches zu einer Dichtheitsprüfung eines Prüflings (10) ausgelegt ist, wobei das erste Messsystem zumindest einen um eine Drehachse (D) gelagerten Anschlussbereich (20) aufweist, über welchen ein Prüfmedium in den Prüfling (10) eingebracht werden kann und welcher zur Aufnahme bzw. zum Halten des Prüflings (10) vorgesehen ist, wobei der Prüfling (10) über den zumindest einen Anschlussbereich (20) in eine Rotation versetzbar ist, auf welcher die Maßüberprüfung basiert;
- Bereitstellen eines zweiten Messsystems, welches zu einer Maßüberprüfung des Prüflings (10) ausgelegt ist;
- Drehen oder Rotieren des angeschlossenen bzw. verbundenen Prüflings (10) zur Maßüberprüfung;
- Durchführen der Maßüberprüfung während der Dichtheitsprüfung.

12. Messverfahren nach Anspruch 11,
wobei die Drehung oder Rotation mit einer vorgegebenen Drehzahl erfolgt, und
wobei die Maßüberprüfung auf der Vermessung von Hüllkurven basiert.

13. Messverfahren nach einem der Ansprüche 11-12,
umfassend den Schritt:
- Vermessen zumindest eines Grenzmusters zum Bewerten einer maßlichen Abweichung des Prüflings (10).

## Claims

1. Test device,
comprising a first measurement system that is designed for a leak tightness test of a unit under test (10), and also
comprising a second measurement system that is designed for a dimensional check of the unit under test (10), wherein the first measurement system has at least one connector region (20) via which a test medium can be introduced into the unit under test (10) and which is provided for receiving or holding the unit under test (10), and
wherein the unit under test (10) is able, via the at least one connector region (20), to be set in a rotation on which the dimensional check is based,
wherein the at least one connector region (20) is mounted so as to be able to be turned about a turning axis (D).

2. Test device according to Claim 1,
wherein the dimensional check is a three-dimensional optical measurement.

3. Test device according to Claim 1 or 2,
wherein the at least one connector region (20) is arranged on a support element (30) that is mounted so as to be able to be turned about an axis of rotation (R).

4. Test device according to Claim 3,
wherein a position of the at least one connector region (20) on the support element (30) is variable.

5. Test device according to either of Claims 3 and 4, wherein two support elements (30) are provided opposite one another, and wherein at least one connector region (20) is preferably provided on each support element (30).

6. Test device according to one of Claims 3 to 5, wherein a distance between the support elements (30) relative to one another is variable.

7. Test device according to one of Claims 3 to 6, wherein the at least one connector region (20) has a linking region (22) that is designed for the form-fit and/or force-fit arrangement of the unit under test (10),
and
wherein the inclination thereof relative to the axis of rotation (R) or the turning axis (D) is variable.

8. Test device according to one of the preceding claims,
wherein the dimensional check is an optical rotation measurement.

9. Test device according to one of the preceding claims,
wherein the second measurement system comprises an image capturing system that comprises at least two cameras (40) .

10. Test device according to one of the preceding claims,
wherein the test device comprises a housing (50).

11. Measurement method, in particular for line systems of automotive applications,
comprising the steps of:
- providing a first measurement system designed for a leak tightness test of a unit under test (10), wherein the first measurement system has at least one connector region (20) that is mounted about a turning axis (D) and via which a test medium can be introduced into the unit under test (10) and that is provided for receiving or holding the unit under test (10), wherein the unit under test (10) is able to be set in a rotation, on which the dimensional check is based, by way of the at least one connector region (20);
- providing a second measurement system designed for a dimensional check of the unit under test (10);
- turning or rotating the connected or linked unit under test (10) for the dimensional check;
- performing the dimensional check during the leak tightness test.

12. Measurement method according to Claim 11,
wherein the turning or rotating takes place at a specified turning speed, and
wherein the dimensional check is based on the measurement of envelopes.

13. Measurement method according to either of Claims 11 and 12,
comprising the step of:
- measuring at least one limit sample for assessing a dimensional deviation of the unit under test (10).

## Revendications

1. Dispositif de contrôle,
comprenant un premier système de mesure qui est conçu pour un contrôle d'étanchéité d'un échantillon (10), ainsi que
comprenant un deuxième système de mesure qui est conçu pour une vérification dimensionnelle de l'échantillon (10),
le premier système de mesure présentant au moins une zone de raccordement (20) par laquelle un milieu de contrôle peut être introduit dans l'échantillon (10) et qui est prévue pour recevoir ou maintenir l'échantillon (10), et
l'échantillon (10) pouvant, par l'intermédiaire de ladite au moins une zone de raccordement (20), être mis en une rotation sur laquelle se base la vérification dimensionnelle,
ladite au moins une zone de raccordement (20) étant montée pivotante autour d'un axe de pivotement (D).

2. Dispositif de contrôle selon la revendication 1, dans lequel la vérification dimensionnelle est un mesurage optique tridimensionnel.

3. Dispositif de contrôle selon la revendication 1 ou 2, dans lequel ladite au moins une zone de raccordement (20) est disposée sur un élément de support (30) qui est monté rotatif autour d'un axe de rotation (R).

4. Dispositif de contrôle selon la revendication 3, dans lequel une position de ladite au moins une zone de raccordement (20) sur l'élément de support (30) est variable.

5. Dispositif de contrôle selon l'une quelconque des revendications 3 à 4, dans lequel deux éléments de support (30) sont prévus face à face, et au moins une zone de raccordement (20) étant prévue sur chaque élément de support (30).

6. Dispositif de contrôle selon l'une quelconque des revendications 3 à 5, dans lequel une distance des éléments de support (30) l'un par rapport à l'autre est variable.

7. Dispositif de contrôle selon l'une quelconque des revendications 3 à 6,
ladite au moins une zone de raccordement (20) présentant une zone de liaison (22) qui est conçue pour une disposition de l'échantillon (10) par complémentarité de forme et/ou par adhérence, et l'inclinaison de celui-ci par rapport à l'axe de rotation (R) ou à l'axe de pivotement (D) étant variable.

8. Dispositif de contrôle selon l'une quelconque des revendications précédentes, dans lequel la vérification dimensionnelle est un mesurage optique par rotation.

9. Dispositif de contrôle selon l'une quelconque des revendications précédentes, dans lequel le deuxième système de mesure comprend un système de capture d'image qui comprend au moins deux caméras (40).

10. Dispositif de contrôle selon l'une quelconque des revendications précédentes, dans lequel le dispositif de contrôle comprend une enceinte (50).

11. Procédé de mesure, en particulier pour des systèmes de tuyauterie d'applications automobiles, comprenant les étapes consistant à :
- fournir un premier système de mesure qui est conçu pour un contrôle d'étanchéité d'un échantillon (10), le premier système de mesure présentant au moins une zone de raccordement (20) montée autour d'un axe de pivotement (D) par laquelle un milieu de contrôle peut être introduit dans l'échantillon (10) et qui est prévue pour recevoir ou maintenir l'échantillon (10), l'échantillon (10) pouvant, par l'intermédiaire de ladite au moins une zone de raccordement (20), être mis en une rotation sur laquelle se base la vérification dimensionnelle ;
- fournir un deuxième système de mesure qui est conçu pour un contrôle dimensionnel de l'échantillon (10) ;
- faire pivoter ou tourner l'échantillon (10) raccordé ou relié pour la vérification dimensionnelle ;
- effectuer la vérification dimensionnelle pendant le contrôle d'étanchéité.

12. Procédé de mesure selon la revendication 11,
le pivotement ou la rotation étant effectué(e) à une vitesse de rotation prédéfinie, et
la vérification dimensionnelle étant basée sur le mesurage d'enveloppantes.

13. Procédé de mesure selon l'une quelconque des revendications 11 à 12, comprenant l'étape consistant à :
- mesurer au moins un motif limite pour évaluer un écart dimensionnel de l'échantillon (10).
